(19) Europäisches Patentamt / European Patent Office / Office européen des brevets

(11) **EP 3 661 247 A1**

(12) **EUROPEAN PATENT APPLICATION**
published in accordance with Art. 153(4) EPC

(43) Date of publication:
**03.06.2020 Bulletin 2020/23**

(51) Int Cl.:
***H04W 16/14*** *(2009.01)*

(21) Application number: **17921510.8**

(22) Date of filing: **18.08.2017**

(86) International application number:
**PCT/CN2017/098007**

(87) International publication number:
**WO 2019/033388 (21.02.2019 Gazette 2019/08)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **Huawei Technologies Co., Ltd.
Longgang District
Shenzhen, Guangdong 518129 (CN)**

(72) Inventors:
• **LI, Zhenyu
Shenzhen
Guangdong 518129 (CN)**

• **ZHANG, Wurong
Shenzhen
Guangdong 518129 (CN)**
• **NAN, Yang
Shenzhen
Guangdong 518129 (CN)**
• **HAN, Jinxia
Shenzhen
Guangdong 518129 (CN)**

(74) Representative: **Epping - Hermann - Fischer
Patentanwaltsgesellschaft mbH
Schloßschmidstraße 5
80639 München (DE)**

(54) **METHOD AND DEVICE USED FOR TRANSMITTING DATA**

(57) This application provides a data transmission method, to help increase a data transmission success rate. The method includes: broadcasting, by a network device, first channel information, where the first channel information is used to indicate a channel state of each of N channels, the channel state is that the channel is available or that the channel is unavailable, and $N \geq 1$; and determining, by the network device, a channel for frequency hopping transmission based on the channel state of each channel.

FIG. 3

## Description

## TECHNICAL FIELD

This application relates to the communications field, and more specifically, to a data transmission method and device.

## BACKGROUND

A frequency hopping spread spectrum (frequency hopping spread spectrum, FHSS) technology refers to that a transmit end and a receive end for communication synchronously change a frequency domain resource to perform data transmission.

In actual application, there may be a scenario in which different transmission technologies coexist. For example, a broadband-based communications device and an FHSS-based communications device may simultaneously perform data transmission. For example, a wireless fidelity (wireless fidelity, Wi-Fi) device and a Bluetooth device simultaneously perform data transmission. In this case, a frequency domain resource, for frequency hopping transmission, used by the FHSS-based communications device may overlap a frequency domain resource occupied by the broadband-based communications device. Consequently, data transmitted by the FHSS-based communications device is prone to collide with data transmitted by the broadband-based communications device, resulting in a transmission failure.

## SUMMARY

This application provides a data transmission method and device, to help increase a transmission success rate.

According to a first aspect, a data transmission method is provided. The method includes: broadcasting, by a network device, first channel information, where the first channel information is used to indicate a channel state of each of N channels, the channel state is that the channel is available or that the channel is unavailable, and $N \geq 1$; and determining, by the network device, a channel for frequency hopping transmission based on the channel state of each channel.

In this embodiment of this application, the network device may broadcast the first channel information, so that a terminal device can learn about the channel state of each of the N channels. The network device determines the channel for frequency hopping transmission based on the channel state of each channel. This helps prevent the network device from sending or receiving data on an unavailable channel, thereby increasing a data transmission success rate. Further, the network device broadcasts the first channel information, so that a plurality of terminal devices can obtain the first channel information, thereby reducing signaling overheads.

In a possible implementation, the broadcasting, by a network device, first channel information includes: broadcasting, by the network device, the first channel information on a channel for synchronization signal transmission.

In this embodiment of this application, the network device broadcasts the first channel information on the channel for synchronization signal transmission. Generally, the channel for synchronization signal transmission has a fixed frequency location, and a frequency domain resource on which the channel for synchronization signal transmission is located is not interfered with by a Wi-Fi system. Based on this, the network device broadcasts the first channel information on the channel for synchronization signal transmission, thereby increasing a transmission success rate of the first channel information. In addition, a terminal device needs to detect a synchronization signal when performing cell search or random access. Therefore, when the first channel information is broadcast on the channel for synchronization signal transmission, the terminal device that is performing the cell search or the random access can more easily obtain the first channel information. This method has relatively high applicability.

In a possible implementation, before the broadcasting, by a network device, first channel information, the method further includes: sending, by the network device, channel indication information on a channel for synchronization signal transmission, where the channel indication information is used to indicate a channel for broadcasting the first channel information.

In this embodiment of this application, the network device sends the channel indication information on the channel for synchronization signal transmission, so that a terminal device receives the first channel information based on the channel indication information. This solution helps prevent the network device from sending the first channel information on an unavailable channel, thereby increasing a transmission success rate of the first channel information.

In a possible implementation, before the broadcasting, by a network device, first channel information, the method further includes: sending, by the network device, update indication information, where the update indication information is used to notify that channel information is updated, and the first channel information is updated channel information.

In this embodiment of this application, the network device sends the update indication information, so that a terminal device receives the first channel information based on the update indication information. This helps the terminal device obtain the first channel information in a timely manner.

In a possible implementation, the sending, by the network device, update indication information includes sending, by the network device, the update indication information in a first time period. The broadcasting, by a network device, first channel information includes broadcasting, by the network device, the first channel information in a second time period. The second time period and the first time period are two adjacent time periods.

In this embodiment of this application, the network device sends the update indication information in a time period, and performs data transmission on an updated channel starting from another time period. This helps a terminal device synchronously perform a channel update.

Optionally, in a possible implementation, the sending or receiving, by the network device, data on the determined channel for frequency hopping transmission includes: sending or receiving, by the network device, data on the determined channel for frequency hopping transmission starting from a start location of the second time period.

Optionally, in a possible implementation, the method may further include sending or receiving, by the network device, data on the determined channel for frequency hopping transmission.

Optionally, in a possible implementation, the sending or receiving, by the network device, data on the determined channel for frequency hopping transmission includes: sending, by the network device, data to the terminal device on the determined channel for frequency hopping transmission; or receiving, by the network device, data from the terminal device on the determined channel for frequency hopping transmission.

According to a second aspect, a data transmission method is provided. The method includes: receiving, by a terminal device from a network device, a broadcast message carrying first channel information, where the first channel information is used to indicate a channel state of each of N channels, the channel state is that the channel is available or that the channel is unavailable, and $N \geq 1$; and determining, by the terminal device, a channel for frequency hopping transmission based on the first channel information.

In this embodiment of this application, the terminal device receives the first channel information, and the terminal device determines the channel for frequency hopping transmission based on the first channel information. This helps prevent the terminal device from sending or receiving data on an unavailable channel, thereby increasing a data transmission success rate. Further, the first channel information is carried in the broadcast message, thereby reducing signaling overheads.

In a possible implementation, the receiving, by a terminal device from a network device, a broadcast message carrying first channel information includes: receiving, by the terminal device, the first channel information on a channel for synchronization signal transmission.

In this embodiment of this application, the terminal device receives the first channel information on the channel for synchronization signal transmission, thereby increasing a transmission success rate of the first channel information.

In a possible implementation, the method further includes: receiving, by the terminal device, channel indication information on a channel for synchronization signal transmission, where the channel indication information is used to indicate a channel on which the network device broadcasts the first channel information. The receiving, by a terminal device from a network device, a broadcast message carrying first channel information includes receiving, by the terminal device, the first channel information based on the channel indication information.

In this embodiment of this application, the channel indication information is used to indicate the channel on which the network device broadcasts the first channel information. This solution helps increase a success rate of receiving, by the terminal device, the first channel information.

In a possible implementation, before the receiving, by a terminal device from a network device, a broadcast message carrying first channel information, the method further includes: receiving, by the terminal device, update indication information from the network device, where the update indication information is used to notify that channel information is updated, and the first channel information is updated channel information. The receiving, by a terminal device from a network device, a broadcast message carrying first channel information includes: receiving, by the terminal device, the first channel information based on the update indication information.

In this embodiment of this application, the terminal device receives the update indication information, and determines, based on the update indication information, that the channel information is updated, to receive the first channel information. This solution helps reduce power consumption of the terminal device, and helps the terminal device obtain the first channel information in a timely manner.

In a possible implementation, the receiving, by the terminal device, update indication information from the network device includes: receiving, by the terminal device, the update indication information in a first time period. The receiving, by a terminal device from a network device, a broadcast message carrying first channel information includes: receiving, by the terminal device, the first channel information based on the update indication information in a second time period. The first time period and the second time period are two adjacent time periods.

In this embodiment of this application, the terminal device receives the update indication information in a time period, and receives the first channel information in another time period. This helps the terminal device synchronously perform a channel information update.

Optionally, in a possible implementation, the method may further include receiving or sending, by the terminal device, data on the determined channel for frequency hopping transmission.

Optionally, in a possible implementation, the receiving or sending, by the terminal device, data on the determined channel for frequency hopping transmission includes: receiving, by the terminal device, data from the network device on the determined channel for frequency hopping transmission; or sending, by the terminal device, data to the network device on the determined channel for frequency hopping transmission.

With reference to any one of the foregoing aspects or the possible implementations of the foregoing aspects, in a possible implementation, the first time period and the second time period are two adjacent time cycles of a plurality of time cycles.

In this embodiment of this application, the network device sends the update indication information in a current cycle, and the network device performs the channel update in a next cycle. This solution helps the terminal device and the network device synchronously perform the channel update.

With reference to any one of the foregoing aspects or the possible implementations of the foregoing aspects, in a possible implementation, the channel information is a bitmap. The bitmap includes N bits that are one-to-one corresponding to the N channels, and each of the N bits is used to indicate a channel state of a corresponding channel. Alternatively, each of at least one bit in the bitmap is used to indicate a channel state of J of the N channels, and $J \geq 2$.

In this embodiment of this application, each bit in the bitmap may indicate whether one channel is available, or at least one bit in the bitmap may indicate whether at least two channels are available. This solution helps reduce overheads of the first channel information.

With reference to any one of the foregoing aspects or the possible implementations of the foregoing aspects, in a possible implementation, a total bandwidth of the J channels is greater than or equal to a preset threshold, and the J channels are consecutive in frequency domain.

Optionally, with reference to any one of the foregoing aspects or the possible implementations of the foregoing aspects, in a possible implementation, $N \geq 2$, and the N channels are consecutive in frequency domain. The channel information includes index information and quantity information corresponding to the index information. The index information is used to indicate a channel with a smallest number in the N channels, and the quantity information is used to indicate N. The index information and the quantity information are specifically used to indicate that the N channels are available, or the index information and the quantity information are jointly used to indicate that the N channels are unavailable.

In this embodiment of this application, the index information and the quantity information are jointly used to indicate whether the N channels are available, thereby reducing channel overheads.

Optionally, with reference to any one of the foregoing aspects or the possible implementations of the foregoing aspects, in a possible implementation, the total bandwidth of the J channels is greater than or equal to 5 megahertz and/or the total bandwidth of the J channels is less than or equal to 20 megahertz.

Optionally, with reference to any one of the foregoing aspects or the possible implementations of the foregoing aspects, in a possible implementation, the update indication information is carried in a paging message, the update indication information is carried in a unicast message, or the update indication information is carried in a second broadcast message. The update indication information is a MIB value tag unequal to a master system information block MIB value tag of the third broadcast message, or the update indication information is a SIB value tag unequal to a master system information block SIB value tag of the third broadcast message. The third broadcast message is a broadcast message previous to the second broadcast message.

In this embodiment of this application, the network device may send the update indication information in one of a plurality of manners. This solution has relatively high compatibility and applicability. It should be understood that the "broadcast message carrying the first channel information" may be described as a "first broadcast message", and a "broadcast message carrying the update indication information" may be described as the "second broadcast message".

Optionally, with reference to any one of the foregoing aspects or the possible implementations of the foregoing aspects, in a possible implementation, duration of the first time period is equal to first duration. A boundary of the first time period belongs to a preset boundary corresponding to the first duration, and the boundary includes a start location or an end location. The second time period and the first time period are consecutive, and duration of the second time period is equal to the duration of the first time period.

According to a third aspect, a data transmission device is provided, including units configured to perform any one of the first aspect or the possible implementations of the first aspect. The device may be a network device or a baseband chip.

According to a fourth aspect, a data transmission device is provided, including units configured to perform any one of the second aspect or the possible implementations of the second aspect. The device may be a terminal device or a baseband chip.

According to a fifth aspect, a data transmission device is provided, including a transmission component and a processor, to enable the device to perform the method in any one of the first aspect or the possible implementations of the first aspect. Optionally, the device may further include a receiving component. The device may be a network device or a baseband chip. When the device is a network device, the transmission component may be a transmitter, and the receiving component may be a receiver. When the device is a baseband chip, the transmission component may be an output circuit of the baseband chip, and the receiving component may be an input circuit of the baseband chip.

According to a sixth aspect, a data transmission device is provided, including a receiving component and a processor, to enable the device to perform the method in any one of the second aspect or the possible implementations of the second aspect. Optionally, the device may further include a transmission component. The device may be a terminal device or a baseband chip. When the device is a terminal device, the receiving component may be a receiver, and the transmission component may be a transmitter. When the device is a baseband chip, the receiving component may be an input circuit of the baseband chip, and the transmission component may be an output circuit of the baseband chip.

According to a seventh aspect, a computer program product is provided, and the computer program product includes computer program code. When the computer program code is run on a terminal device, the terminal device is enabled to perform the method in any one of the first aspect or the possible implementations of the first aspect.

According to an eighth aspect, a computer program product is provided, and the computer program product includes computer program code. When the computer program code is run on a network device, the terminal device is enabled to perform the method in any one of the second aspect or the possible implementations of the second aspect.

According to a ninth aspect, a computer readable medium is provided. The computer readable medium stores program code, and the program code includes an instruction used to perform the method in any one of the first aspect or the possible implementations of the first aspect.

According to a tenth aspect, a computer readable medium is provided. The computer readable medium stores program code, and the program code includes an instruction used to perform the method in any one of the second aspect or the possible implementations of the second aspect.

In the embodiments of this application, the channel for frequency hopping transmission is determined based on the channel state of each of the N channels. This helps prevent the network device and the terminal device from transmitting data on an unavailable channel, thereby increasing a data transmission success probability. Further, the network device may broadcast the first channel information. This solution helps reduce signaling overheads. Still further, the network device may send the update indication information to indicate that channel information is updated, so that the terminal device receives the first channel information based on the update indication information. This solution helps improve efficiency of obtaining, by the terminal device, the first channel information.

## BRIEF DESCRIPTION OF DRAWINGS

FIG. 1 is a schematic diagram of an example in which collision occurs between data transmitted by two types of communications devices in the prior art;
FIG. 2 is a diagram of an application scenario applicable to an embodiment of this application;
FIG. 3 is a schematic interaction diagram of an example of a data transmission method according to an embodiment of this application;
FIG. 4 is a schematic diagram of an example of a channel in a Wi-Fi system;
FIG. 5 is a schematic diagram of an example of a channel in an FHSS system;
FIG. 6 is a schematic diagram of an example of a data transmission method according to an embodiment of this application;
FIG. 7 is a schematic diagram of another example of a data transmission method according to an embodiment of this application;
FIG. 8 is a schematic block diagram of an example of a data transmission device according to an embodiment of this application;
FIG. 9 is a schematic block diagram of another example of a data transmission device according to an embodiment of this application;
FIG. 10 is a schematic block diagram of still another example of a data transmission device according to an embodiment of this application; and
FIG. 11 is a schematic block diagram of yet another example of a data transmission device according to an embodiment of this application.

## DESCRIPTION OF EMBODIMENTS

The following describes technical solutions of this application with reference to accompanying drawings.

It should be understood that division of manners, cases, types, and embodiments in embodiments of this application are merely for ease of description, but should not constitute any special limitation, and features in various manners, types, cases, and embodiments may be combined when there is no contradiction.

It should also be understood that "first", "second", and "third" in the embodiments of this application are merely intended to distinguish, and should not constitute any limitation on this application.

It should also be understood that sequence numbers of processes do not mean execution sequences in the embodiments of this application. The execution sequences of the processes should be determined according to functions and internal logic of the processes, and should not constitute any limitation on the implementation processes of the embodiments of this application.

It should also be understood that sequence numbers of processes do not mean execution sequences in the embodiments of this application. The execution sequences of the processes should be determined according to functions and internal logic of the processes, and should not constitute any limitation on the implementation processes of the embodiments of this application.

The embodiments of this application may be applied to various FHSS-based communications systems, for example, a machine type communication on unlicensed spectrum (enhanced machine type communication on unlicensed spectrum, eMTC-U) system or a Bluetooth system.

In the embodiments of this application, a network device is an apparatus, deployed in a radio access network, that is configured to provide a wireless communication function for a terminal device. The network device may include base stations in various forms, such as a macro base station, a micro base station (also referred to as a small cell), a relay station, an access point, a new radio controller (new radio controller, NR controller), a centralized unit (centralized unit), a remote radio unit, a distributed unit (distributed unit), a reception point (transmission reception point, TRP), or a transmission point (transmission point, TP), or any other radio access device, but the embodiments of this application are not limited thereto. In systems that use different radio access technologies, names of devices with a base station function may vary. For example, the network device may be an access point (access point, AP) in a wireless local area network (wireless local area networks, WLAN), or may be an evolved NodeB (evolved NodeB, eNB or eNodeB) in an LTE system. Alternatively, the network device may be a NodeB (Node B) in a third generation (3rd generation, 3G) system. In addition, the network device may alternatively be a relay station or an access point, a vehicle-mounted device, a network device in a future fifth generation (fifth-generation, 5G) network, a network device in a future evolved public land mobile network (public land mobile network, PLMN), or the like.

A terminal device in the embodiments of this application may include various handheld devices, vehicle-mounted devices, wearable devices, or computing devices, that have a wireless communication function, or other processing devices connected to a wireless modem. The terminal device may be a device, in a communications system (for example, a 5G system), that accesses a network side by using a network device (for example, an NR or a TRP), and may also be referred to as user equipment (user equipment, UE). The terminal device is a device providing voice and/or data connectivity for a user, for example, a handheld device or a vehicle-mounted device with a wireless connection function. A common terminal includes, for example, a mobile phone, a tablet computer, a notebook computer, a palmtop computer, a mobile internet device (mobile internet device, MID), or a wearable device such as a smartwatch, a smart band, and a pedometer. The terminal device may alternatively be a relay device (Relay).

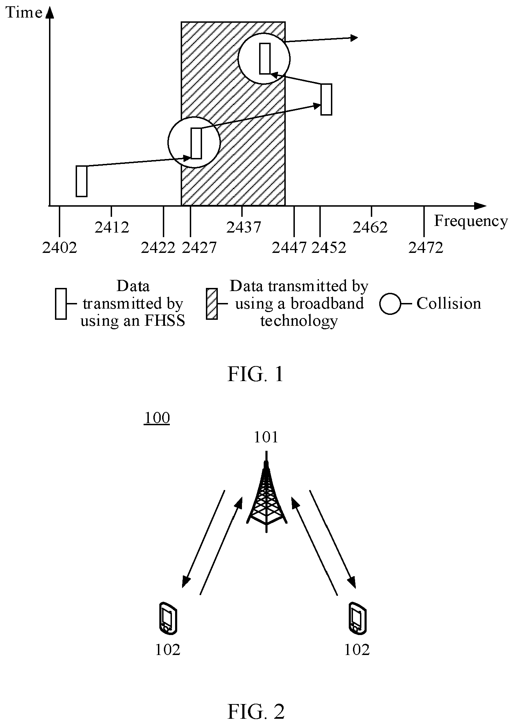

FIG. 1 is a schematic diagram of an example in which collision occurs between data transmitted by two types of communications devices in the prior art. As shown in FIG. 1, a frequency domain resource used for frequency hopping transmission may overlap a frequency domain resource used in a broadband technology. In this case, data transmitted by using an FHSS technology may collide with data transmitted by using the broadband technology, resulting in a transmission failure.

Based on this, the embodiments of this application provide a data transmission method, to help increase a transmission success rate.

FIG. 2 is a diagram of an application scenario applicable to an embodiment of this application. As shown in FIG. 2, the application scenario includes a network device 101, and the application scenario further includes a plurality of terminal devices 102 located within a coverage area of the network device 101. The network device 101 may communicate with the terminal device 102 by using an FHSS technology. It should be understood that only two terminal devices 102 within the coverage area of the network device 101 are used as an example in FIG. 2. It is clear that there may be more terminal devices 102 in the coverage area of the network device 101.

To facilitate understanding of the embodiments of this application, several concepts in the embodiments of this application are first described.

Frequency hopping transmission: The frequency hopping transmission refers to that a carrier frequency changes, based on an agreed pattern or sequence, within a specific frequency band range when a network device or a terminal device sends data. For example, frequency hopping is performed after a specified period (for example, 400 milliseconds) of transmission on each channel, and the period of transmission on each channel is specified in a protocol.

Frequency hopping pattern: The frequency hopping pattern represents a change rule of a signal carrier frequency (a channel) of two communication ends. For example, a network device and a terminal device receive and send data according to the rule. In other words, a channel on which data transmission is performed at a specified time point may be obtained based on the frequency hopping pattern.

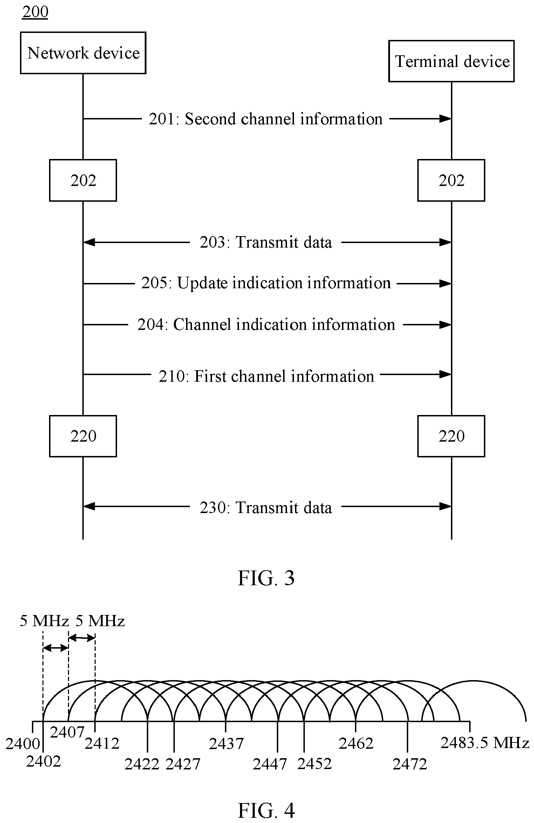

The following describes in detail a data transmission method in the embodiments of this application with reference to FIG. 3 to FIG. 6.

FIG. 3 is a schematic interaction diagram of an example of a data transmission method according to an embodiment of this application. It should be understood that FIG. 3 shows detailed steps or operations of the method 200. However, these steps or operations are merely an example. In this embodiment of this application, another operation may be further performed or only some of the operations in FIG. 3 are performed.

The method 200 may be performed by a network device and/or a terminal device. Optionally, the network device and the terminal device may be respectively corresponding to the network device 101 and the terminal device 102 in the foregoing communication scenario. As shown in FIG. 3, the method 200 may include step 210 and step 220.

210: The network device broadcasts first channel information, and correspondingly, the terminal device may receive the first channel information.

It should be understood that, that the network device broadcasts first channel information may be as follows: The network device sends the first channel information by using a message, so that a plurality of terminal devices can obtain the first channel information. Specifically, the network device may broadcast the first channel information in one of a plurality of manners.

For example, the network device may send a broadcast message carrying the first channel information. Optionally, the broadcast message may be a system message. The system message may include a master system information block (master information block, MIB) message or a system information block (system information block, SIB) message.

For another example, the network device may send the first channel information on a cell-level control channel. The cell-level control channel may be a common control channel (common physical downlink control channel, CPDCCH).

The first channel information is used to indicate a channel state of each of N (N ≥ 1) channels, and the channel state is that the channel is available or that the channel is unavailable. The first channel information may indicate the channel state of each channel in one of the following manners.

(1) The first channel information is specifically used to indicate whether each of the N channels is available.

Optionally, the first channel information may be a bitmap (bitmap). Each bit in the bitmap may be used to indicate whether at least one of the N channels is available. That is, each bit in the bitmap may be corresponding to at least one channel. It should be understood that a quantity of channels corresponding to a bit may be the same as or different from a quantity of channels corresponding to another bit.

For example, the bitmap may include N bits corresponding to the N channels respectively, and each bit is used to indicate whether one corresponding channel is available.

For another example, the bitmap includes K (2 ≤ K ≤ N) bits. Each of the K bits corresponds to J (J ≥ 2) channels, and each bit is used to indicate whether the corresponding J channels are available. Optionally, J is a preset value, and the preset value may be defined in a standard or may be preconfigured by the network device. Optionally, a total bandwidth of the J channels is greater than or equal to a preset threshold. The preset threshold may be defined in a standard or may be preconfigured by the network device. Optionally, the J channels are consecutive in frequency domain.

For still another example, the bitmap includes L (2 ≤ L ≤ N) bits. K (1 ≤ K ≤ L) of the L bits correspond to J channels, and (L - K) bits correspond to G (G ≥ 1) channels. For detailed descriptions of J, refer to the foregoing related descriptions. For brevity, details are not described herein.

That is, in this embodiment of this application, a bit in the bitmap may be used to indicate whether one channel is available, and/or a bit in the bitmap is used to indicate whether a plurality of channels are available. Further, optionally, interference on the 2.4 GHz band mainly comes from a broadband system, that is, a Wi-Fi system, and therefore a value of J may be determined based on a channel bandwidth of the Wi-Fi system.

FIG. 4 is a schematic diagram of a channel in a Wi-Fi system. As shown in FIG. 4, the Wi-Fi system includes 13 channels. Each device performs data transmission on one of the 13 channels. It can be learned from FIG. 4 that a spacing between center frequencies of two adjacent channels of the 13 channels is 5 MHz. Assuming that a Wi-Fi device performs data transmission on a first channel of the 13 channels, a frequency band occupied by the Wi-Fi device is 2402-2422 MHz. That is, the entire 2402-2422 MHz is occupied by the Wi-Fi device. Assuming that the Wi-Fi device performs data transmission on a second channel of the 13 channels, a frequency band occupied by the Wi-Fi device is 2407-2427 MHz. That is, the frequency band 2402-2407 MHz is not occupied, and the frequency band 2407-2427 MHz is occupied. It can be learned that a minimum granularity of the frequency band occupied by the Wi-Fi device or the frequency band not occupied by the Wi-Fi device is 5 MHz.

Based on FIG. 4, in an optional example, the total bandwidth of the J channels may be equal to or approximately equal to 5 MHz. Assuming that a bandwidth of each channel in an FHSS system is 1.4 MHz, 5 ≤ 1.4 x J, that is, 5/1.4 ≤ J. Optionally, 3 ≤ J. That is, each of the foregoing K bits may be used to indicate whether three channels are available.

For example, assuming that the FHSS system has 75 (N = 75) channels in total, the bitmap may include 25 bits, and each bit is used to indicate whether three channels are available.

For another example, assuming that the FHSS system has 79 (N = 79) channels in total, because 79 is not an integer multiple of 3, the bitmap may include 27 bits. Each of first 26 of the 27 bits is used to indicate whether three channels are available, and a last bit of the 27 bits is used to indicate whether one channel (a 79th channel) is available.

Based on FIG. 4, in another optional example, the total bandwidth of the J channels may be equal to or approximately equal to 20 MHz. For example, 1.4 x J ≤ 20 MHz, that is, J ≤ 20/1.4. Optionally, J ≤ 15. That is, each of the foregoing K bits may be used to indicate whether 15 channels are available.

For example, assuming that the FHSS system has 75 (N = 75) channels in total, the bitmap may include five bits, and each bit is used to indicate whether 15 channels are available.

For another example, assuming that the FHSS system has 79 (N = 79) channels in total, the bitmap may include six bits. Each of first five of the six bits is used to indicate whether 15 channels are available, and a last bit of the six bits is used to indicate whether four channels (a 76th channel, a 77th channel, a 78th channel, and a 79th channel) are available.

That is, assuming that a bandwidth of each channel in the FHSS system is D MHz, optionally, J may meet the following formula:

$$5/D \leq J \leq 20/D \qquad (1)$$

D is a value of the bandwidth of each channel in the FHSS system, and J is a quantity of channels. Optionally, if D = 1.4 MHz, $3 \leq J \leq 15$.

In this embodiment of this application, a plurality of channels are bonded together and indicated by using one bit, thereby reducing overheads of the first channel information.

(2) The first channel information is specifically used to indicate that the N channels each are available.

That is, the first channel information may be a whitelist (white list). Each channel indicated by the first channel information is an available channel. For example, each channel has an index (or identifier), and the first channel information may be used to indicate an index of an available channel.

For example, the first channel information may include an identifier of each of the N channels.

For another example, the N channels are consecutive in frequency domain. The first channel information includes index information and quantity information corresponding to the index information. The index information may be used to indicate a channel with a smallest number (or a largest number) in the N channels, and the quantity information is used to indicate N. The index information and the quantity information are jointly used to indicate that the N channels are available channels.

(3) The first channel information is specifically used to indicate that the N channels each are unavailable.

That is, the first channel information may be a blacklist (black list). Each channel indicated by the first channel information is an unavailable channel. For related descriptions about that the first channel information is used to indicate that the N channels each are unavailable, refer to the foregoing related descriptions. For brevity, details are not described herein.

220: The network device determines a channel for frequency hopping transmission based on the channel state of each channel, and correspondingly, the terminal device determines the channel for frequency hopping transmission based on the first channel information (the channel state of each channel).

It should be understood that the channel for frequency hopping transmission includes a plurality of channels. For ease of description, a "channel for frequency hopping transmission" may be described as a "channel set", and the "channel for frequency hopping transmission determined based on the channel state of each of the N channels" is described as a "first channel set".

The network device is used as an example. Assuming that the network device determines, based on the channel state of each channel, that a channel #1 is unavailable, the network device may determine that the channel #1 does not belong to the first channel set. Assuming that the network device determines, based on the channel state of each channel, that a channel #2 is available, the network device may determine that the channel #2 belongs to the first channel set. The network device and the terminal may select one or some channels from the first channel set according to an agreed frequency hopping rule, to perform data transmission. For related descriptions of the terminal device in step 220, refer to related descriptions of the network device. For brevity, details are not described herein.

Optionally, the method 200 may further include the following:

230: The network device sends or receives data on the determined channel for frequency hopping transmission, and correspondingly, the terminal device receives or sends data on the determined channel for frequency hopping transmission.

Optionally, that the network device sends or receives data on the determined channel for frequency hopping transmission may include the following: The network device sends data to the terminal device based on the first channel set, or the network device receives data from the terminal device based on the first channel set. Similarly, optionally, that the terminal device receives or sends data on the determined channel for frequency hopping transmission may include the following: The terminal device receives data from the network device based on the first channel set, or the terminal device sends data to the network device based on the first channel set. It should be understood that the terminal device may, based on the first channel set, further send data to another terminal device or receive data from another terminal device.

In an optional example, that the network device sends or receives data on the determined channel for frequency hopping transmission may include the following: The network device determines a frequency hopping pattern based on the first channel set, and the network device sends or receives data based on the frequency hopping pattern.

For ease of description, step 230 may be described as "the network device and the terminal device perform data transmission on the determined channel for frequency hopping transmission".

In this embodiment of this application, the network device may send the first channel information, where the first channel information is used to indicate the channel state of each of the N channels, so that the terminal device obtains a channel state of the N channels. The network device (or the terminal device) may determine the channel for frequency hopping transmission based on the channel state of the N channels. This helps prevent the network device (or the terminal device) from sending or receiving data on an unavailable channel, thereby increasing a data transmission success rate. Further, compared with that the network device sends the first channel information in a unicast manner, that the network device broadcasts the first channel information helps reduce signaling overheads.

Further, the network device may broadcast the first channel information in one of the following manners.

Manner #1

Step 210 may include the following:

The network device broadcasts the first channel information on a channel for synchronization signal transmission.

Specifically, a channel in an FHSS system includes a data channel or a channel for synchronization signal transmission. The data channel is a channel (a channel set) for frequency hopping transmission in the FHSS system. It should be understood that a network device determines a different channel for frequency hopping transmission in a different case. However, each channel for frequency hopping transmission determined by the network device belongs to the data channel.

For example, it is assumed that the FHSS system includes 79 data channels, and the 79 data channels include a channel #1 and a channel #2. At a first moment, the network device determines, through channel detection, that the channel #1 is unavailable and the channel #2 is available, so that the network device determines that a channel for frequency hopping transmission does not include the channel #1 and includes the channel #2. The channel for frequency hopping transmission determined by the network device belongs to the 79 data channels. At a second moment, the network device determines, through channel detection, that the channel #1 is available and the channel #2 is unavailable, so that the network device determines that a channel for frequency hopping transmission includes the channel #1 and does not include the channel #2. The channel for frequency hopping transmission determined by the network device belongs to the 79 data channels.

Generally, to increase a transmission success rate of a synchronization signal, a channel for synchronization signal transmission in the FHSS system has a fixed frequency location, and a frequency band for synchronization signal transmission is located in a guard band (guard band) of a Wi-Fi system. It should be understood that, in the Wi-Fi system, a network device and a terminal device do not transmit data within the guard band. Therefore, it may be considered that the guard band of Wi-Fi is a blank resource in the Wi-Fi system. That is, the channel for synchronization signal transmission is not interfered with by the Wi-Fi system.

For example, currently, a network device transmits a synchronization signal on an anchor channel (Anchor channel). It should be understood that the anchor channel has a fixed frequency location, and a frequency band of the anchor channel is located in the guard band of the Wi-Fi system.

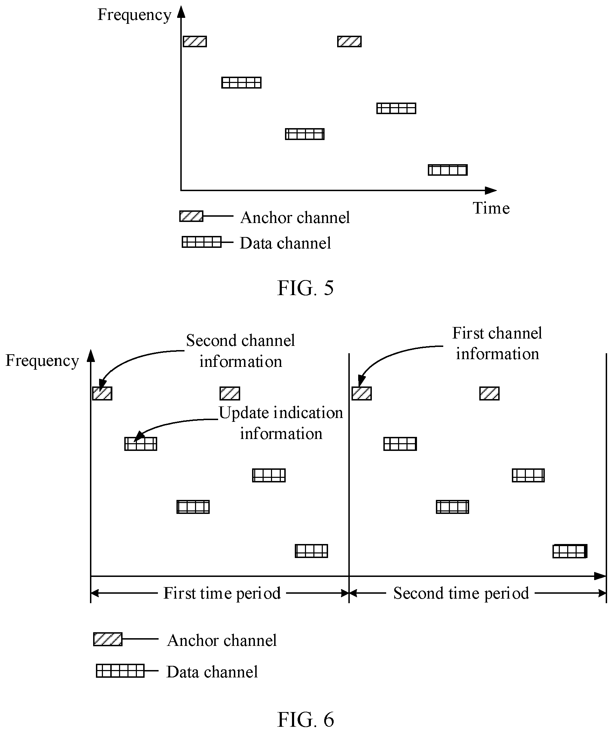

FIG. 5 is a schematic diagram of an example of a channel in an FHSS system. As shown in FIG. 5, the FHSS system includes a data channel and an anchor channel. A network device transmits a synchronization signal on the anchor channel. For example, the network device transmits a primary synchronization signal (primary synchronization signal, PSS) or a secondary synchronization signal (secondary synchronization signal, SSS) on the anchor channel. The network device may further transmit information, such as a MIB and a SIB, on the anchor channel.

Based on this, to increase a transmission success rate of the first channel information, the network device may broadcast the first channel information on the channel for synchronization signal transmission. For example, the network device may broadcast the first channel information on the anchor channel. This solution helps increase a success rate of transmitting, by the network device, the first channel information. Further, data is sent on a fixed channel of the anchor channel, and no frequency hopping is performed. Therefore, sending the first channel information on the anchor channel facilitates channel alignment between the network device and the terminal device. That is, the network device sends the first channel information on the anchor channel, and the terminal device receives the first channel information on the anchor channel, thereby avoiding a problem that the network device sends the first channel information on a data channel #1 and the terminal device receives the first channel information on a data channel #2.

It should be understood that the FHSS system may include a plurality of anchor channels, and the network device may send a synchronization signal on the plurality of anchor channels, or may send a synchronization signal on one of the plurality of anchor channels. It should be understood that regardless of a manner in which the network device sends the synchronization signal, the network device may send the first channel information on a channel for sending the synchronization signal. For example, the network device may send the first channel information on at least two of the plurality of anchor channels, or the network device may send the first channel information on one of the plurality of anchor channels. This is not limited in this embodiment of this application.

Manner #2

Step 210 may include the following:

The network device broadcasts the first channel information on a data channel.

In this embodiment of this application, the network device may send channel information, so that the network device and the terminal device may update a channel for frequency hopping transmission. In an optional example, before the network device broadcasts the first channel information, the method 200 may further include the following:

201: The network device broadcasts second channel information, and correspondingly, the terminal device receives the second channel information, where the second channel information is used to indicate a channel state of each of E (E ≥ 1) channels.

It should be understood that, for related descriptions of step 201, reference may be made to related descriptions of step 210. For brevity, details are not described herein.

Optionally, the method 200 may further include the following:

202: The network device determines a channel for frequency hopping transmission based on the channel state of each of the E channels, and correspondingly, the terminal device determines the channel for frequency hopping transmission based on the channel state of each of the E channels.

Optionally, the method 200 may further include the following:

203: The network device and the terminal device perform data transmission on the determined channel for frequency hopping transmission.

That is, the network device may update channel information, so that the network device and the terminal device may update a channel (a channel set) for frequency hopping transmission based on updated channel information. In this embodiment of this application, the second channel information may be considered as "pre-update -channel information", and the first channel information may be considered as the "updated channel information". The "channel for frequency hopping transmission determined based on the channel state of each of the E channels" is considered as a "pre-update- channel for frequency hopping transmission". The "channel for frequency hopping transmission determined based on the channel state of each of the N channels" is considered as an "updated channel for frequency hopping transmission". It can be learned from the foregoing description that the "updated channel for frequency hopping transmission" may be described as the "first channel set", and similarly, the "pre-update-channel for frequency hopping transmission" may be described as a "second channel set".

That is, before the network device and the terminal device perform data transmission based on the first channel set, the network device and the terminal device perform data transmission based on the second channel set.

It should be understood that, that the network device and the terminal device perform data transmission based on the second channel set includes the following: The network device and the terminal device determine (or calculate) a frequency hopping pattern based on the second channel set, and the network device and the terminal device perform data transmission based on the frequency hopping pattern. For ease of description, the "frequency hopping pattern determined based on the second channel set" may be described as a "second frequency hopping pattern". Similarly, the "frequency hopping pattern determined based on the first channel" may be described as a "first frequency hopping pattern". That is, it may be considered that the channel information is updated to update the channel set for frequency hopping transmission. It may also be considered that the channel information is updated to update the frequency hopping pattern.

Generally, the network device updates the channel information because there may be an unavailable channel in a current channel set (a channel for frequency hopping transmission), or an originally unavailable channel is currently available. For example, a current channel for frequency hopping transmission includes a channel #1. The network device determines, through channel detection, that the channel #1 is unavailable, and the network device needs to update channel information, so that the terminal device learns that the channel #1 is unavailable. After receiving updated channel information, the terminal device may determine, based on the updated channel information, a channel for frequency hopping transmission that does not include the channel #1, thereby improving data transmission efficiency.

Because there may be an unavailable channel in the second channel set, when the network device sends the first channel information based on the second frequency hopping pattern, a transmission failure of the first channel information may occur. For example, the second channel set includes a channel #1, and the network device determines, through channel detection, that the channel #1 is unavailable. In this case, if the network device transmits the first channel information on the channel #1 based on the second frequency hopping pattern, the first channel information may not be sent successfully.

Based on this, the network device may determine, based on the channel state of the N channels, a channel (a data channel) for sending the first channel information. That is, the network device may not perform data transmission based on the second frequency hopping pattern. In this case, the method 200 may further include the following:

204: The network device sends channel indication information on a channel for synchronization signal transmission, and correspondingly, the terminal device receives the channel indication information, where the channel indication information is used to indicate a channel for broadcasting the first channel information.

Optionally, it is assumed that the channel for synchronization signal transmission is an anchor channel. Therefore, sending the channel indication information on the anchor channel facilitates frequency hopping channel alignment between the network device and the terminal device. That is, the network device sends the channel indication information on the anchor channel, and the terminal device receives the channel indication information on the anchor channel, thereby avoiding a problem that the network device sends the channel indication information a data channel #1 and the terminal device receives the channel indication information on a data channel #2. This helps increase a success rate of receiving, by the terminal device, the channel indication information, and helps align a channel on which the network device sends the first channel information with a channel on which the terminal device receives the first channel information.

The terminal device receives the channel indication information and may determine a location of the first channel information based on the channel indication information, so that the terminal device can receive the first channel information at the location.

For example, the channel indication information is used to indicate a channel #2. After receiving the channel indication information on the anchor channel, the terminal device may perform frequency hopping to switch to the channel #2, to receive the first channel information.

Further, optionally, the channel indication information may be further used to indicate a time domain resource for broadcasting the first channel information. For example, the channel indication information is used to indicate a subframe #2 and the channel #2. After receiving the channel indication information on the anchor channel, the terminal device may receive the first channel information at a location of the subframe #2 and the channel #2.

In this embodiment of this application, the network device broadcasts the first channel information on the channel for synchronization signal transmission, or the network device sends information (channel indication information) related to the first channel information on the channel for synchronization signal transmission. On the one hand, this helps increase a success rate of receiving, by the terminal device, the first channel information. On the other hand, when performing cell search or random access, the terminal device may obtain the first channel information or the channel indication information on the channel for synchronization signal transmission. This method helps the terminal device that is not connected to the network device obtain the first channel information. This solution has relatively good compatibility and applicability.

Further, the method 200 may further include the following:

205: The network device sends update indication information, and correspondingly, the terminal device receives the update indication information, where the update indication information is used to notify that channel information is updated.

A manner in which the terminal device listens to the channel for synchronization signal transmission may include the following.

(1) Real-time listening

To be specific, the terminal device listens to, in real time, the channel for synchronization signal transmission. This manner helps prevent the terminal device from missing information sent by the network device, but power consumption of this manner is relatively high.

(2) Periodic listening

To be specific, the terminal device periodically listens to the channel for synchronization signal transmission. Compared with the real-time listening, this manner can reduce power consumption of the terminal device. However, this solution is unfavorable to obtaining, by the terminal device in a timely manner, information sent by the network device.

Based on this, in this embodiment of this application, the network device may send the update indication information, and after receiving the update indication information, the terminal device may learn that the channel information is updated. This helps the terminal device determine that there is a need to obtain the first channel information.

Optionally, the terminal device may listen to the channel for synchronization signal transmission after receiving the update indication information, so that the terminal device obtains the first channel information on the channel for synchronization signal transmission, or the terminal device obtains the channel indication information on the channel for synchronization signal transmission and obtains the first channel information based on the channel indication information.

This solution not only helps reduce power consumption of the terminal device, but also helps the terminal device obtain corresponding information in a timely manner, thereby helping the terminal device obtain the first channel information.

It should be understood that, that the terminal device listens to the channel for synchronization signal transmission after receiving the update indication information is a preferred implementation of this embodiment of this application, and should not constitute any limitation on this application. If the terminal device does not send the channel indication information, but directly broadcasts the first channel information on a data channel, the terminal device listens to the data channel for a broadcast message after receiving the update indication information, to obtain the first channel information.

The network device may send the update indication information in one of a plurality of manners.

In an optional example, the network device may send the update indication information by using a unicast message. For example, assuming that a terminal device #1 is currently connected to a network device #1 and the network device #1 needs to update channel information, the network device #1 may send update indication information to the terminal device #1 by using a unicast message, so that the terminal device #1 listens to a channel for synchronization signal transmission based on the update indication information. The unicast message may include a physical layer message or a radio resource control (Radio Resource Control, RRC) message.

In another optional example, the network device may send the update indication information by using a paging message. For example, assuming that a terminal device #2 is currently not connected to the network device #1 and the network device #1 needs to update the channel information, the network device #1 may send the update indication information to the terminal device #2 by using a paging message, so that the terminal device #2 listens to the channel for synchronization signal transmission based on the update indication information.

In still another optional example, the network device may send the update indication information by using a broadcast message. For ease of, the broadcast message carrying the first channel information may be described as a "first broadcast message", and a "broadcast message carrying the update indication information" may be described as a "second broadcast message". The network device may send the update indication information by using the second broadcast message, where the update indication information is specifically a MIB value tag unequal to a MIB value tag (value tag) of a third broadcast message, or the update indication information is specifically a SIB value tag unequal to a SIB value tag of a third broadcast message. The third broadcast message is a broadcast message previous to the second broadcast message. That is, the network device may indicate, to the terminal device by updating the MIB value tag or updating the SIB value tag, that the channel information is updated. Correspondingly, the terminal device may determine, based on whether the MIB value tag or the SIB value tag is changed, whether the channel information is updated.

Further, optionally, step 205 may include the following:

The network device sends the update indication information in a first time period.

Optionally, step 210 may include the following:

The network device broadcasts the first channel information in a second time period, and correspondingly, the terminal device receives the first channel information in the second time period.

That is, the network device sends the update indication information in the first time period, and the network device may broadcast the first channel information starting from the second time period. It should be understood that the network device still sends the second channel information in the first time period. That is, the network device still sends the pre-update-channel information in the first time period.

Optionally, step 230 may include the following:

The network device communicates data with the terminal device based on the first channel set starting from a start location of a second time period. Correspondingly, starting from the start location of the second time period, the terminal device may, by listening to the channel for synchronization signal transmission, obtain the first channel information, or obtain the channel indication information and obtain the first channel information based on the channel indication information.

FIG. 6 is a schematic diagram of an example of a data transmission method according to an embodiment of this application. As shown in FIG. 6, a network device may send update indication information in a first time period. The network device broadcasts first channel information in a second time period. The network device sends or receives data based on a first channel set starting from a start location of the second time period. Correspondingly, a terminal device may receive the update indication information in the first time period. In the second time period, the terminal device listens to, based on the update indication information, a channel for synchronization signal transmission, to receive the first channel information. The terminal device may determine the first channel set based on the first channel information, and the terminal device may receive or send data based on the first channel set. Optionally, the network device broadcasts second channel information in the first time period.

In this embodiment of this application, the network device and the terminal device may continue to perform data transmission based on a second channel set in the first time period. The network device performs data transmission based on the first channel set starting from the second time period, and the terminal device performs data transmission based on the first channel set after receiving the first channel information.

In an optional example, as shown in FIG. 5, the network device broadcasts the second channel information in the first time period, so that the network device and the terminal device perform data transmission based on the second channel set. The network device sends the update indication information in the first time period, so that the network device and the terminal device perform a channel set update in the second time period.

That is, channel information broadcast by the network device does not change in a time period. For example, the network device broadcasts the second channel information in the first time period, the network device determines to update channel information in the first time period, and the network device continues to broadcast the second channel information in the first time period. The network device broadcasts the first channel information in the second time period.

Specifically, if the network device broadcasts the first channel information immediately after sending the update indication information, in this case, some terminal devices may not receive the update indication information, and consequently, these terminal devices cannot perform the channel set update in a timely manner, resulting in a failure in subsequent data transmission performed by these terminal devices. The network device broadcasts the update indication information in a time period, and updates the channel information in a next time period. This helps the network device and the terminal device synchronously update a channel set, thereby increasing a data transmission success rate.

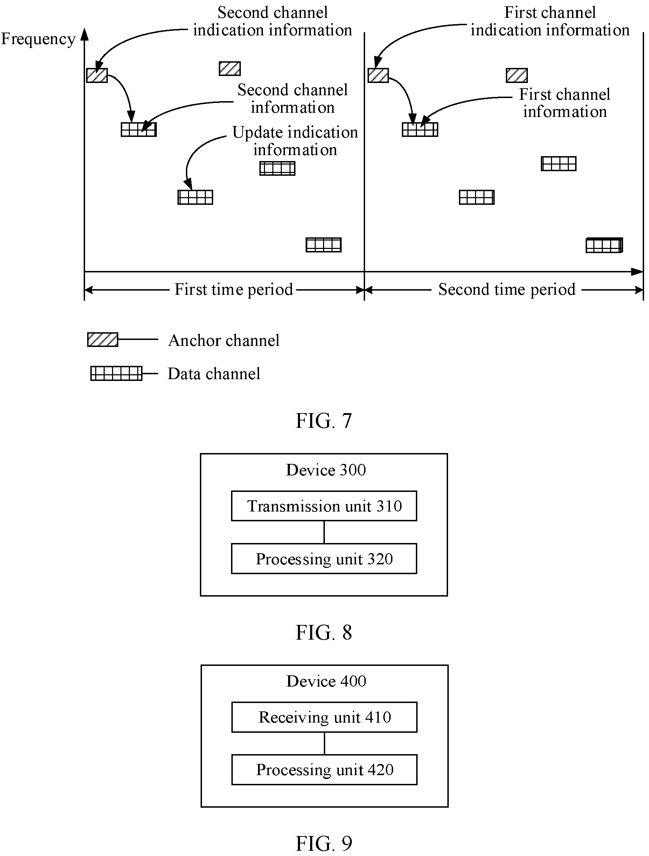

FIG. 7 is a schematic diagram of another example of a data transmission method according to an embodiment of this application. As shown in FIG. 7, a network device may send update indication information in a first time period. The network device sends channel indication information in a second time period. The network device broadcasts first channel information at a location indicated by the channel indication information. The network device sends or receives data based on a first channel set starting from a start location of the second time period. Correspondingly, a terminal device may receive the update indication information in the first time period. In the second time period, the terminal device listens to, based on the update indication information, a channel for synchronization signal transmission, to receive the channel indication information. The terminal device may receive the first channel information based on the channel indication information, and determine the first channel set based on the first channel information. The terminal device receives or sends data based on the first channel set.

Similar to the foregoing descriptions, the network device may broadcast second channel information in the first time period. For ease of description, "channel indication information used to indicate a channel for broadcasting the first channel information" may be described as "first channel indication information, and "channel indication information used to indicate a channel for broadcasting the second channel information" may be described as "second channel indication information". The network device may send the second channel indication information in the first time period, so that the terminal device may receive the second channel information based on the second channel indication information in the first time period. For detailed descriptions of this solution, refer to the foregoing related descriptions. For brevity, details are not described herein.

Further, optionally, the network device may periodically broadcast the first channel information in the second time period. Similarly, the network device may periodically broadcast the second channel information in the first time period.

That is, in this embodiment of this application, the network device may periodically broadcast channel information, and the channel information broadcast by the network device remains unchanged in a time period. For example, the network device periodically broadcasts the second channel information in the first time period, and even though the network device sends the update indication information in the first time period, the network device still broadcasts the second channel information in the first time period. Similarly, the network device periodically broadcasts the first channel information starting from the second time period, until channel information is updated again.

For example, the network device periodically broadcasts the second channel information before the first time period. Assuming that the network device sends the update indication information in the first time period, the network device continues to periodically broadcast the second channel information in the first time period, and the network device periodically broadcasts the first channel information starting from the second time period. The network device sends update indication information in a third time period later than the second time period, where the update indication information is used to notify that channel information is updated. The network device sends third channel information in a fourth time period later than the third time period. The network device periodically broadcasts the first channel information starting from the second time period to the third time period.

Based on the foregoing descriptions, in this embodiment of this application, the network device sends data based on a frequency hopping pattern in a time period. For example, the network device sends data based on a second frequency hopping pattern before the second time period, and the network device sends data based on a first frequency hopping pattern starting from the second time period until the frequency hopping pattern is updated again. Similarly, the terminal device sends data based on a frequency hopping pattern in a time period.

Optionally, the first time period and the second time period are two adjacent time periods. Further, optionally, the first time period and the second time period may be two adjacent time cycles of a plurality of time cycles.

Specifically, the network device and the terminal device may agree on the time cycle in advance, the time cycle may be specified in a protocol, or the network device may configure the time cycle for the terminal device. For example, the method 200 may include the following:

The network device sends cycle information, where the cycle information is used to configure the time cycle for the terminal device. The cycle information is specifically used to indicate first duration and a boundary corresponding to the first duration. The boundary includes a start location or an end location. Duration of the time cycle is the first duration, and a boundary of the time cycle is the boundary corresponding to the first duration.

It is assumed that the cycle information indicates that the first duration is five subframes, and the cycle information is further used to indicate that the boundary corresponding to the first duration is a subframe #0. Therefore, the duration of the time cycle is five subframes, and the boundaries of the time cycle are the subframe #0 and a subframe #5. The first time period may be from the subframe #0 to a subframe #4, and the second time period may be from the subframe #5 to a subframe #9.

That is, assuming that the network device finds, through channel detection, that a channel is unavailable, the network device may send the update indication information in a time cycle #n (n > 0), broadcast the first channel information in a time cycle # (n + 1), and perform data transmission based on the first channel set starting from the time cycle # (n + 1). Alternatively, assuming that the network device finds, through channel detection, that a channel is unavailable, the network device may send the update indication information in a time cycle #n, send the channel indication information and the first channel information in a time cycle # (n + 1), and performs data transmission based on the first channel set starting from the time cycle # (n + 1).

Optionally, the first duration is greater than or equal to a return cycle of the channel for synchronization signal transmission.

It should be understood that the network device periodically sends information on the channel for synchronization signal transmission. That is, after sending information #1 on the channel for synchronization signal transmission, the network device needs to wait for a period of time before sending information again. Duration of the period of time is the return cycle of the channel for synchronization signal transmission.

If the first duration is less than the return cycle, when the channel for synchronization signal transmission reaches the first duration, the channel for synchronization signal transmission may be unable to transmit the first channel information. Based on this, the first duration is greater than or equal to the return cycle of the channel for synchronization signal transmission, so that the network device can efficiently send the first channel information.

Optionally, the first duration is an integer multiple of a paging cycle.

It should be understood that the network device periodically sends a paging message. That is, after sending a paging message #1, the network device needs to wait for a period of time before sending a paging message again. The period of time is the paging cycle.

If the first duration is less than the paging cycle, assuming that the network device determines that channel information is updated, the network device may be unable to send a paging message carrying update indication information. Based on this, the first duration is greater than or equal to the paging cycle, so that the network device can efficiently notify the terminal device that the channel information is updated.

The foregoing describes the data transmission method according to the embodiments of this application with reference to FIG. 3 to FIG. 7, and the following describes a data transmission device according to the embodiments of this application with reference to FIG. 8 to FIG. 11.

FIG. 8 is a schematic block diagram of an example of a data transmission device according to an embodiment of this application. As shown in FIG. 8, the device 300 includes:

a transmission unit 310, configured to broadcast first channel information, where the first channel information is used to indicate a channel state of each of N channels, the channel state is that the channel is available or that the channel is unavailable, and N ≥ 1; and
a processing unit 320, configured to determine a channel for frequency hopping transmission based on the channel state of each channel.

Optionally, the transmission unit 310 is further configured to send data on the determined channel for frequency hopping transmission.

Optionally, the device 300 may further include a receiving unit, configured to receive data on the determined channel for frequency hopping transmission.

Optionally, the transmission unit 310 is specifically configured to broadcast the first channel information on a channel for synchronization signal transmission.

Optionally, the transmission unit 310 is further configured to send channel indication information on the channel for synchronization signal transmission before the transmission unit 310 broadcasts the first channel information. The channel indication information is used to indicate a channel for broadcasting the first channel information.

Optionally, the transmission unit 310 is further configured to send update indication information before the transmission unit 310 broadcasts the first channel information. The update indication information is used to notify that channel information is updated, and the first channel information is updated channel information.

Optionally, the transmission unit 310 is specifically configured to send the update indication information in a first time period, and communicate data with a terminal device on the determined channel for frequency hopping transmission starting from a start location of a second time period. The second time period and the first time period are two adjacent time periods.

Optionally, the first time period and the second time period are two adjacent time cycles of a plurality of time cycles.

Optionally, the channel information is a bitmap. The bitmap includes N bits that are one-to-one corresponding to the N channels, and each of the N bits is used to indicate a channel state of a corresponding channel. Alternatively, each of at least one bit in the bitmap is used to indicate a channel state of J of the N channels, and J ≥ 2.

Optionally, a total bandwidth of the J channels is greater than or equal to a preset threshold, and the J channels are consecutive in frequency domain.

It should be understood that the units of the device 300 provided in this embodiment of this application and the foregoing other operations or functions are used to implement a corresponding procedure performed by the network device in the method 200 provided in the embodiments of this application. For brevity, details are not described herein.

FIG. 9 is a schematic block diagram of another example of a data transmission device according to an embodiment of this application. As shown in FIG. 9, the device 400 includes:

a receiving unit 410, configured to receive, from a network device, a broadcast message carrying first channel information, where the first channel information is used to indicate a channel state of each of N channels, the channel state is that the channel is available or that the channel is unavailable, and N ≥ 1; and

a processing unit 420, configured to determine a channel for frequency hopping transmission based on the first channel information.

Optionally, the receiving unit 410 is further configured to receive data on the determined channel for frequency hopping transmission.

Optionally, the device 400 may further include a transmission unit, configured to send data on the determined channel for frequency hopping transmission.

Optionally, the receiving unit 410 is specifically configured to receive the first channel information on a channel for synchronization signal transmission.

Optionally, the receiving unit 410 is further configured to receive channel indication information on the channel for synchronization signal transmission. The channel indication information is used to indicate a channel on which the network device broadcasts the first channel information.

The receiving unit 410 is specifically configured to receive the first channel information based on the channel indication information.

Optionally, the receiving unit 410 is further configured to receive update indication information from the network device before the receiving unit 410 receives, from the network device, the broadcast message carrying the first channel information. The update indication information is used to notify that channel information is updated, and the first channel information is updated channel information.

The receiving unit 410 is specifically configured to receive the first channel information based on the update indication information.

Optionally, the receiving unit 410 is specifically configured to receive the update indication information in a first time period, and receive, based on the update indication information, the first channel information in a second time period.

Optionally, the first time period and the second time period are two adjacent time cycles of a plurality of time cycles.

Optionally, the bitmap includes N bits that are one-to-one corresponding to the N channels, and each of the N bits is used to indicate a channel state of a corresponding channel. Alternatively, each of at least one bit in the bitmap is used to indicate a channel state of J of the N channels, and J ≥ 2.

Optionally, a total bandwidth of the M channels is greater than or equal to a preset threshold, and the M channels are consecutive in frequency domain.

It should be understood that the units of the device 400 provided in this embodiment of this application and the foregoing other operations or functions are used to implement a corresponding procedure performed by the terminal device in the method 200 provided in the embodiments of this application. For brevity, details are not described herein.

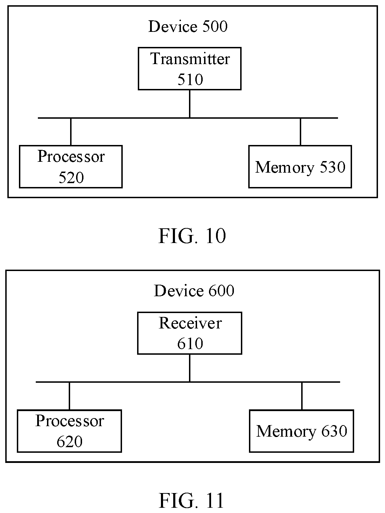

FIG. 10 is a schematic block diagram of still another example of a data transmission device according to an embodiment of this application. As shown in FIG. 10, the device 500 includes a transmitter 510 and a processor 520. The processor 520 is configured to control the transmitter 510. The processor 520 is configured to support the device in performing a corresponding function of the network device in the foregoing method. Optionally, the device 500 may further include a memory 530. Optionally, the device may further include a receiver. The memory 530 is configured to be coupled to the processor 520, and store a program instruction and data that are necessary for the device 500. The processor 520 is specifically configured to execute the instruction stored in the memory 530. When the instruction is executed, the device performs the method performed by the first terminal device in the foregoing method.

It should be noted that the device 300 shown in FIG. 8 may be implemented by the device 500 shown in FIG. 10. For example, the transmission unit 310 shown in FIG. 8 may be implemented by the transmitter 510 in FIG. 10, and the processing unit 320 in FIG. 8 may be implemented by the processor 520 in FIG. 10.

FIG. 11 is a schematic block diagram of yet another example of a data transmission device according to an embodiment of this application. As shown in FIG. 11, the device 600 includes a receiver 610 and a processor 620. The processor 620 is configured to control the receiver 610. The processor 620 is configured to support the device in performing a corresponding function of the terminal device in the foregoing method. Optionally, the device 600 may further include a memory 630. Optionally, the device 600 may further include a transmitter. The memory 630 is configured to be coupled to the processor 620, and store a program instruction and data that are necessary for the device 600. The processor 620 is specifically configured to execute the instruction stored in the memory 630. When the instruction is executed, the device performs the method performed by the first terminal device in the foregoing method.

It should be noted that the device 400 shown in FIG. 9 may be implemented by the device 600 shown in FIG. 11. For example, the receiving unit 410 shown in FIG. 9 may be implemented by the receiver 610 in FIG.

11, and the processing unit 420 in FIG. 9 may be implemented by the processor 620 in FIG. 11.

It should be noted that the terminal device and the network device are used as an example in this application to describe the method and the device for determining a transmission direction in the embodiments of this application. It should be understood that the method for determining a transmission direction in the embodiments of this application may alternatively be implemented by two baseband chips, where a first baseband chip of the two baseband chips is configured to implement a related operation of the terminal device in the embodiments of this application, and a second baseband chip of the two baseband chips is configured to implement a related operation of the network device in the embodiments of this application.

It should be further noted that an input/output circuit of the first baseband chip can be configured to implement a related operation of the receiver and the transmitter of the foregoing terminal device, and an input/output circuit of the second baseband chip can be configured to implement a related operation of the receiver and the transmitter of the foregoing network device.

It should be understood that, the processor in the embodiments of this application may be a central processing unit (central processing unit, CPU), or may further be another general purpose processor, a digital signal processor (digital signal processor, DSP), an application specific integrated circuit (application specific integrated circuit, ASIC), a field programmable gate array (field programmable gate array, FPGA), or another programmable logical device, discrete gate or transistor logical device, discrete hardware component, or the like.

It may be understood that the memory in the embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of random access memory (random access memory, RAM) may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus dynamic random access memory (direct rambus RAM, DR RAM).

All or some of the foregoing embodiments may be implemented by means of software, hardware, firmware, or any combination thereof. When software is used to implement the embodiments, all or some of the foregoing embodiments may be implemented in a form of a computer program product. The computer program product includes one or more computer instructions. When the computer program instructions are loaded executed on a computer, the procedures or functions according to the embodiments of this application are all or partially generated. The computer may be a general purpose computer, a dedicated computer, a computer network, or another programmable apparatus. The computer instructions may be stored in a computer readable storage medium or may be transmitted from a computer readable storage medium to another computer readable storage medium. For example, the computer instructions may be transmitted from a website, computer, server, or data center to another website, computer, server, or data center in a wired (for example, infrared, radio, and microwave, or the like) manner. The computer readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a digital versatile disc (digital versatile disc, DVD)), or a semiconductor medium. The semiconductor medium may be a solid-state drive.

The term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

A person of ordinary skill in the art may be aware that, units and algorithm steps in the examples described with reference to the embodiments disclosed in this specification may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units are integrated into one unit.

When the functions are implemented in the form of a software functional unit and sold or used as an independent product, the functions may be stored in a computer readable storage medium. Based on such an understanding, the technical solutions of this application essentially, or the part contributing to the prior art, or some of the technical solutions may be implemented in a form of a software product. The software product is stored in a storage medium, and includes several instructions for instructing a computer device (which may be a personal computer, a server, a network device, or the like) to perform all or some of the steps of the methods described in the embodiments of this application. The foregoing storage medium includes any medium that can store program code, such as a USB flash drive, a removable hard disk, a read-only memory (ROM), a random access memory (RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A data transmission method, comprising:

    broadcasting, by a network device, first channel information, wherein the first channel information is used to indicate a channel state of each of N channels, the channel state is that the channel is available or that the channel is unavailable, and N ≥ 1; and
    determining, by the network device, a channel for frequency hopping transmission based on the channel state of each channel.

2. The method according to claim 1, wherein the broadcasting, by a network device, first channel information comprises:
    broadcasting, by the network device, the first channel information on a channel for synchronization signal transmission.

3. The method according to claim 1, wherein before the broadcasting, by a network device, first channel information, the method further comprises:
    sending, by the network device, channel indication information on a channel for synchronization signal transmission, wherein the channel indication information is used to indicate a channel for broadcasting the first channel information.

4. The method according to any one of claims 1 to 3, wherein before the broadcasting, by a network device, first channel information, the method further comprises:
    sending, by the network device, update indication information, wherein the update indication information is used to notify that channel information is updated, and the first channel information is updated channel information.

5. The method according to claim 4, wherein the sending, by the network device, update indication information comprises:

    sending, by the network device, the update indication information in a first time period; and
    the broadcasting, by a network device, first channel information comprises:
    broadcasting, by the network device, the first channel information in a second time period, wherein the second time period and the first time period are two adjacent time periods.

6. The method according to claim 5, wherein the first time period and the second time period are two adjacent time cycles of a plurality of time cycles.

7. The method according to any one of claims 1 to 6, wherein the channel information is a bitmap, wherein the bitmap comprises N bits corresponding to the N channels respectively, and each of the N bits is used to indicate a channel state of a corresponding channel; or

each of at least one bit in the bitmap is used to indicate a channel state of J of the N channels, and $J \geq 2$.

8. The method according to claim 7, wherein a total bandwidth of the J channels is greater than or equal to a preset threshold, and the J channels are consecutive in frequency domain.

9. A data transmission method, comprising:

receiving, by a terminal device from a network device, a broadcast message carrying first channel information, wherein the first channel information is used to indicate a channel state of each of N channels, the channel state is that the channel is available or that the channel is unavailable, and $N \geq 1$; and
determining, by the terminal device, a channel for frequency hopping transmission based on the first channel information.

10. The method according to claim 9, wherein the receiving, by a terminal device from a network device, a broadcast message carrying first channel information comprises:
receiving, by the terminal device, the first channel information on a channel for synchronization signal transmission.

11. The method according to claim 9, wherein the method further comprises:

receiving, by the terminal device, channel indication information on a channel for synchronization signal transmission, wherein the channel indication information is used to indicate a channel on which the network device broadcasts the first channel information; and
the receiving, by a terminal device from a network device, a broadcast message carrying first channel information comprises:
receiving, by the terminal device, the first channel information based on the channel indication information.

12. The method according to any one of claims 9 to 11, wherein before the receiving, by a terminal device from a network device, a broadcast message carrying first channel information, the method further comprises:

receiving, by the terminal device, update indication information from the network device, wherein the update indication information is used to notify that channel information is updated, and the first channel information is updated channel information; and
the receiving, by a terminal device from a network device, a broadcast message carrying first channel information comprises:
receiving, by the terminal device, the first channel information based on the update indication information.

13. The method according to claim 12, wherein the receiving, by the terminal device, update indication information from the network device comprises:

receiving, by the terminal device, the update indication information in a first time period; and
the receiving, by a terminal device from a network device, a broadcast message carrying first channel information comprises:
receiving, by the terminal device, the first channel information based on the update indication information in a second time period, wherein the first time period and the second time period are two adjacent time periods.

14. The method according to claim 13, wherein the first time period and the second time period are two adjacent time cycles of a plurality of time cycles.

15. The method according to any one of claims 9 to 14, wherein the bitmap comprises N bits corresponding to the N channels respectively, and each of the N bits is used to indicate a channel state of a corresponding channel; or
each of at least one bit in the bitmap is used to indicate a channel state of J of the N channels, and $J \geq 2$.

16. The method according to claim 15, wherein a total bandwidth of the J channels is greater than or equal to a preset threshold, and the J channels are consecutive in frequency domain.

17. A data transmission device, comprising:

a transmission unit, configured to broadcast first channel information, wherein the first channel information is used to indicate a channel state of each of N channels, the channel state is that the channel is available or that the channel is unavailable, and $N \geq 1$; and
a processing unit, configured to determine a channel for frequency hopping transmission based on the channel state of each channel.

18. The device according to claim 17, wherein the transmission unit is specifically configured to broadcast the first channel information on a channel for synchronization signal transmission.

19. The device according to claim 17, wherein the transmission unit is further configured to send channel indication information on a channel for synchronization signal transmission before the transmission unit broadcasts the first channel information, and the channel indication information is used to indicate a channel for broadcasting the first channel information.

20. The device according to any one of claims 17 to 19, wherein the transmission unit is further configured to send update indication information before the transmission unit broadcasts the first channel information, the update indication information is used to notify that channel information is updated, and the first channel information is updated channel information.

21. The device according to claim 20, wherein the transmission unit is specifically configured to:

    send the update indication information in a first time period; and
    broadcast the first channel information in a second time period, wherein the second time period and the first time period are two adjacent time periods.

22. The device according to claim 21, wherein the first time period and the second time period are two adjacent time cycles of a plurality of time cycles.

23. The device according to any one of claims 17 to 22, wherein the channel information is a bitmap, wherein the bitmap comprises N bits corresponding to the N channels respectively, and each of the N bits is used to indicate a channel state of a corresponding channel; or
    each of at least one bit in the bitmap is used to indicate a channel state of J of the N channels, and $J \geq 2$.

24. The device according to claim 23, wherein a total bandwidth of the J channels is greater than or equal to a preset threshold, and the J channels are consecutive in frequency domain.

25. A data transmission device, comprising:

    a receiving unit, configured to receive, from a network device, a broadcast message carrying first channel information, wherein the first channel information is used to indicate a channel state of each of N channels, the channel state is that the channel is available or that the channel is unavailable, and $N \geq 1$; and
    a processing unit, configured to determine a channel for frequency hopping transmission based on the first channel information.

26. The device according to claim 25, wherein the receiving unit is specifically configured to receive the first channel information on a channel for synchronization signal transmission.

27. The device according to claim 26, wherein the receiving unit is further configured to receive channel indication information on the channel for synchronization signal transmission, and the channel indication information is used to indicate a channel on which the network device broadcasts the first channel information; and
    the receiving unit is specifically configured to receive the first channel information based on the channel indication information.

28. The device according to any one of claims 25 to 27, wherein the receiving unit is further configured to receive update indication information from the network device before the receiving unit receives, from the network device, the broadcast message carrying the first channel information, the update indication information is used to notify that channel information is updated, and the first channel information is updated channel information; and
    the receiving unit is specifically configured to receive the first channel information based on the update indication information.

29. The device according to claim 28, wherein the receiving unit is specifically configured to:

    receive the update indication information in a first time period; and
    receive the first channel information based on the update indication information in a second time period, wherein the first time period and the second time period are two adjacent time periods.

30. The device according to claim 29, wherein the first time period and the second time period are two adjacent time cycles of a plurality of time cycles.

31. The device according to any one of claims 25 to 30, wherein the bitmap comprises N bits corresponding to the N channels respectively, and each of the N bits is used to indicate a channel state of a corresponding channel; or
    each of at least one bit in the bitmap is used to indicate a channel state of J of the N channels, and $J \geq 2$.

32. The device according to claim 31, wherein a total bandwidth of the J channels is greater than or equal to a preset threshold, and the J channels are consecutive in frequency domain.

33. A computer readable storage medium, configured to store a computer program, wherein when executed by a processor, the computer program is used to implement the data transmission method according to any one of claims 1 to 16.

Time

2412  2437  2462  Frequency

2402  2422 2427  2447 2452  2472

Data transmitted by using an FHSS

Data transmitted by using a broadband technology

Collision

FIG. 1

<u>100</u>

101

102  102

FIG. 2

FIG. 3

FIG. 4

Frequency

Time

☒—— Anchor channel

▦— Data channel

FIG. 5

Second channel
information

First channel
information

Frequency

Update indication
information

◄—— First time period ——►◄— Second time period ——►

☒—— Anchor channel

▦— Data channel

FIG. 6

FIG. 7

FIG. 8

FIG. 9

Device 500

Transmitter
510

Processor
520

Memory 530

FIG. 10

Device 600

Receiver
610

Processor
620

Memory 630

FIG. 11

<h1 style="text-align:center">INTERNATIONAL SEARCH REPORT</h1>

| International application No. |
|---|
| PCT/CN2017/098007 |

**A.    CLASSIFICATION OF SUBJECT MATTER**

H04W 16/14 (2009.01) i

According to International Patent Classification (IPC) or to both national classification and IPC

**B.    FIELDS SEARCHED**

Minimum documentation searched (classification system followed by classification symbols)

H04W; H04Q; H04L

Documentation searched other than minimum documentation to the extent that such documents are included in the fields searched

Electronic data base consulted during the international search (name of data base and, where practicable, search terms used)

WPI; EPODOC; CNPAT; CNKI: 广播, 信道, 可用, 不可用, 状态, 冲突, 碰撞, 重合, 监测, 检测, 跳频, broadcast+, channel, available, candidate, conflict, overlap, hopping, frequency, detect+

**C.    DOCUMENTS CONSIDERED TO BE RELEVANT**

| Category* | Citation of document, with indication, where appropriate, of the relevant passages | Relevant to claim No. |
|---|---|---|
| X | CN 105704725 A (QINGDAO HISENSE ELECTRIC CO., LTD.), 22 June 2016 (22.06.2016), see description, paragraphs 41-60, and figures 2-3 | 1-33 |
| X | CN 106332314 A (ALIBABA GROUP HOLDING LIMITED), 11 January 2017 (11.01.2017), see description, paragraphs 39-54, and figures 1-2 | 1-33 |
| A | CN 103796295 A (SIEMENS MEDICAL INSTRUMENTS PTC. LTD. et al.), 14 May 2014 (14.05.2014), see entire document | 1-33 |
| A | CN 101471831 A (SAMSUNG SDI CO., LTD. et al.), 01 July 2009 (01.07.2009), see entire document | 1-33 |
| A | US 2007/0091825 A1 (HONEYWELL INTERNATIONAL INC.), 26 April 2007 (26.04.2007), see entire document | 1-33 |

☐ Further documents are listed in the continuation of Box C.        ☒ See patent family annex.

| | |
|---|---|
| *        Special categories of cited documents: | "T"    later document published after the international filing date or priority date and not in conflict with the application but cited to understand the principle or theory underlying the invention |
| "A"    document defining the general state of the art which is not considered to be of particular relevance | |
| "E"    earlier application or patent but published on or after the international filing date | "X"    document of particular relevance; the claimed invention cannot be considered novel or cannot be considered to involve an inventive step when the document is taken alone |
| "L"    document which may throw doubts on priority claim(s) or which is cited to establish the publication date of another citation or other special reason (as specified) | "Y"    document of particular relevance; the claimed invention cannot be considered to involve an inventive step when the document is combined with one or more other such documents, such combination being obvious to a person skilled in the art |
| "O"    document referring to an oral disclosure, use, exhibition or other means | |
| "P"    document published prior to the international filing date but later than the priority date claimed | "&"    document member of the same patent family |

| Date of the actual completion of the international search | Date of mailing of the international search report |
|---|---|
| 16 March 2018 | 27 March 2018 |

| Name and mailing address of the ISA State Intellectual Property Office of the P. R. China No. 6, Xitucheng Road, Jimenqiao Haidian District, Beijing 100088, China Facsimile No. (86-10) 62019451 | Authorized officer SONG, Limei Telephone No. (86-10) 53961710 |
|---|---|

Form PCT/ISA/210 (second sheet) (July 2009)

## INTERNATIONAL SEARCH REPORT
### Information on patent family members

| | International application No. |
|---|---|
| | PCT/CN2017/098007 |

| Patent Documents referred in the Report | Publication Date | Patent Family | Publication Date |
|---|---|---|---|
| CN 105704725 A | 22 June 2016 | None | |
| CN 106332314 A | 11 January 2017 | None | |
| CN 103796295 A | 14 May 2014 | EP 2728764 A1 | 07 May 2014 |
| | | US 2014119408 A1 | 01 May 2014 |
| CN 101471831 A | 01 July 2009 | WO 2009084847 A2 | 09 July 2009 |
| | | US 2009168798 A1 | 02 July 2009 |
| US 2007091825 A1 | 26 April 2007 | EP 1941626 A1 | 09 July 2008 |
| | | WO 2007050385 A1 | 03 May 2007 |

Form PCT/ISA/210 (patent family annex) (July 2009)